Europäisches Patentamt

European Patent Office

Office européen des brevets

(11) Veröffentlichungsnummer: **0 042 143**
**B1**

(12) **EUROPÄISCHE PATENTSCHRIFT**

(45) Veröffentlichungstag der Patentschrift: **30.01.85**

(21) Anmeldenummer: **81104494.0**

(22) Anmeldetag: **11.06.81**

(51) Int. Cl.⁴: **B 26 D 3/18, A 47 J 43/25**

(54) **Küchengerät zum Schneiden von Obst, Gemüse o. dgl. in Streifen.**

(30) Priorität: **12.06.80 DE 3022021**

(43) Veröffentlichungstag der Anmeldung:
**23.12.81 Patentblatt 81/51**

(45) Bekanntmachung des Hinweises auf die
Patenterteilung:
**30.01.85 Patentblatt 85/05**

(84) Benannte Vertragsstaaten:
**AT BE CH DE FR IT LI NL**

(56) Entgegenhaltungen:
**DE-A-1 919 675**
**DE-A-2 806 135**
**DE-B-1 083 517**
**DE-C- 359 314**
**DE-C- 808 481**
**FR-E- 82 488**
**US-A-1 397 469**
**US-A-2 166 622**
**US-A-2 227 364**

(73) Patentinhaber: **Börner, Alfred**
**Industriegebiet**
**D-5561 Landscheid-Niederkail (DE)**

(72) Erfinder: **Börner, Alfred**
**Industriegebiet**
**D-5561 Landscheid-Niederkail (DE)**

(74) Vertreter: **Grommes, Karl F., Dr.**
**Casinostrasse 37**
**D-5400 Koblenz (DE)**

Courier Press, Leamington Spa, England.

**Beschriebung**

Technisches Gebiet

Die Erfindung betrifft ein Küchengerät zum Schneiden von Obst, Gemüse o. dgl. in Streifen mit einer unteren Führungsplatte und einer sich daran anschließenden oberen Führungsplatte, wobei die obere Führungsplatte an ihrer Vorderkante ein horizontales Schneidmesser aufweist und damit schräg in Schneidrichtung verläuft und wobei vor dem horizontalen Schneidmesser mehrere vertikale Schneidmesser feststehend an der unteren Führungsplatte angeordnet sind, welche ihrerseits auswechselbar ist.

Je nach dem Abstand der oberen Führungsplatte bzw. des horizontalen Schneidmessers von der unteren Führungsplatte sowie dem gegenseitigen Abstand der vertikalen Schneidmesser lassen sich mit derartigen Küchengeräten Streifen unterschiedlicher Stärke von meist quadratischem Querschnitt schneiden, angefangen von groben Streifen z.B. für Pommes-frites bis hin zu sehr feinen Streifen beispielsweise für Rohkostgerichte, Suppeneinlagen o. dgl.

Stand der Technik

Derartige Küchengeräte gibt es in verschiedenen Ausführungsformen. Insbesondere gehtdil eingangs besohricbene Ausführungsform auf den Anmelder selbst zurück. Sie zeichnet sich durch ein horizontales Schneidmesser in V-Form aus (vgl. DE—A—1 919 675). Beieiner Weiterentwicklung, welche ebenfalls auf den Anmelder zurückgeht, sind noch besondere Einsätze vorgesehen. Diese lassen sich mit der unteren Führungsplatte kombinieren und verfeinern die ursprüngliche Schneidwirkung weiter. Bei allen Ausführungsformen reichen die vertikalen Schneidmesser mit ihrer Schneidkante jeweils bis auf die Höhe des horizontalen Schneidmessers.

Als nachteilig gilt, daß die vertikalen Schneidmesser zufolge ihrer versetzten Anordnung einzeln hergestellt und an der unteren Führungsplatte befestigt werden. So werden bei den bekannten Küchengeräten des Anmelders die vertikalen Messer als Abschnitte eines fortlaufenden Blechbandes gewonnen. Nachdem jeweils ein Ende davon als Fuß abgewinkelt worden ist, wird jedes Schneidmesser damit einzeln in eine Spritzgießform eingesetzt und in Kunststoff eingebunden. Das ist natürlich sehr aufwendig.

Außerdem bedingt die Handhabung der einzelnen Messer eine bestimmte Materialstärke, um einer unzulässigen Verformung vorzubeugen. So werden in der Regel Blechbänder von mehreren Zehntel Millimetern Stärke, meist drei Zehntel Millimetern Stärke, eingesetzt. Dieses wiederum macht ein Anschleifen des Blechbandes erforderlich, um noch eine ausreichend scharfe Schneidkante zu erhalten. Gleichzeitig bringt aber die Handhabung einer Vielzahl solcher Messer eine nicht unerhebliche Verletzungsgefahr mit sich.

Da das Blechband praktisch nur längsseitig angeschliffen werden kann, finden sich später bei den vertikalen Messern nur an den steil aufgerichteten Vorderseiten Schneidkanten. Die Oberseiten bleiben dagegen stumpf. Sie ziegen die Gestalt, welche sie beim Ablängen des Blechbandes erhalten haben.

Schließlich sind die üblichen Materialstärken hinderlich für den Schneidvorgang. So können die Schneidkanten zwar ein Eindringen der Vertikalen Schneidmesser in einer Frucht erleichtern, jedoch muß anschließend das vertikal aufgeschnittene Fruchtfleisch noch die vorgegebenen Zwischenräume zwischen den vertikalen Schneidmessern passieren. Das lichte Maß dieser Zwischenräume ist gegenüber den Schneidkanten um jeweils eine Materialstärke verringert. Dieser Umstand macht eine erhebliche Materialverdrängung erforderlich, welche um so größer ist, je mehr vertikale Schneidmesser über der Breite des Küchengerätes angeordnet sind. So ergibt sich beispielsweise bei einem Küchengerät mit 23 vertikalen Schneidmessern von jeweils drei Zehntel Millimetern Stärke eine Verringerung des freien Durchgangs um 6,9 Millimeter (1), was natürlich das Schneiden spürbar erschwert.

Bei einem bekannten Küchengerät etwas anderer Art, nämlich einem Zweibelschneider gemäß der DE—B—1 083 517, ist das Problem einer mühsamen Einzelanfertigung von Schneidmessern wohl gelöst, allerdings nicht ohne sonstige Nachteile. So setzt die DE—B—1 083 517 zunächst ein wesentlich komplizierter geformtes Ausgangsmaterial voraus, das ist ein Blech mit einer zickzackförmig gezahnten Längsseite. Damit sollen vertikale Schneidmesser von Parallelogrammform gebildet werden. Dem Schneidgut ist dabei die äußerste Spitze zugerichtet.

Diese Spitze ist der schwächste, da am wenigsten stabilisierte Punkt der Schneidmesser. Er befindet sich nämlich am weitesten von der Basis der Schneideinheit entfernt, bildet den längsten Hebelarm und unterliegt damit am leichtesten Verformungen, insbesondere bei seitlichem Druck. Eine solche Ausgestaltung erfordert demnach nennenswerte Materialstärken, da sonst kein Parallelschnitt mehr gewährleistet ist, es vielmehr zu einem Verklemmen, Verstopfen und zur Funktionsuntüchtigkeit kommen kann.

Andererseits erschwert ein starkes Material wie dargelegt die Schneidarbeit wegen der damit verbundenen Materialverdrängung. Als Ausweg schlägt die DE—B—1 083 517 vor, die Unterlagen in gehöriger Länge mit in Längsrichtung verlaufenden Rillen bzw. Schlitzen zu versehen, in die die nach unten abgewinkelten Flanken hineinragen, um den Schneiden eine gewisse Stabilität zu verleihen.

Abgesehen davon, daß sich damit neue Probleme, nämlich einer komplizierten und unzulänglichen Reinigung ergeben, was für derartige Geräte nicht hingenommen werden kann, ist mit einer solchen Maßnahme aber noch nichts bezüglich der Materialstärke gewonnen. Schließlich enthält nach jener Entgegenhaltung die vorgeschlagene Schneideinheit gleichzeitig auch noch zahlreiche horizontale Schneidelemente, so daß der gesamte Schneiddruck von der Schneideinheit aufgenommen werden muß. Wenn man sich nun vor Augen hält, daß jene Schneideinheit lediglich mit ihren Enden gehalten ist und im übrigen die dazugehörige Unterlage wie eine Brücke überspannt, erkennt man, welche beträchtliche Materialstärke hier für die Schneideinheit und damit für die einzelnen Schneidelemente letztlich erforderlich ist.

Aber nicht nur das Durchziehen einer Frucht betreitet wegen der zwangsläufigen Materialverdrängung Schwierigkeiten, bereits der Anschnitt ist problematisch. Die für den Vertikalschnitt maßgeblichen Schneidflächen oder Schneidkanten 2 c rühren nämlich von einem Stanzvorgang her. Es sind unbehandelte Abscher- oder Abrißflächen. Damit sind solche Schneidelemente den Einzelmessern gemäß der DE—A—1 919 675 wohl unterlegen, denn diese können wenigstens auf einer Seite sehr einfach angeschliffen werden. Dagegen ist bei dem Gegenstand nach der DE—B—1 083 517 ein Anschleifen wegen der komplizierten Ausgangsform wirtschaftlich nicht mehr vertretbar. Dieselben Schwierigkeiten bestehen im übrigen für die horizontalen Schneidelemente, denn dabei werden die maßgeblichen Schneidkanten 2 d auf dieselbe Art gewonnen.

Aber auch andere bekannte Schneidvorrichtungen weisen im Vergleich zum Stand der Technik gemäß der DE—A—1 919 657, von der die Erfindung ausgeht, entscheidende Nachteile bezüglich der größeren Blechstärke der Schneidmesser und der Notwendigkeit des nachträglichen Anschärfens nach dem Abbiegen der Vertikalmesser auf.

Zusammenfassend läßt sich also sagen, daß die bekannten vertikalen Schneidmesser nur sehr aufwendig herzustellen sind und noch kein bequemes Schneiden erlauben. Hält man sich vor Augen, daß derartige Küchengeräte schon seit langem in Gebrauch stehen und millionenfach bentuzt werden, erkennt man die besondere Bedeutung dieses Problems.

Darstellung der Erfindung

Hier setzt nun die Erfindung an. Ihr liegt die Aufgabe zugrunde, vertikale Schneidmesser von einfacherer Art und besserer Schneidwirkung anzugeben.

Diese Aufgabe kann überraschenderweise dadurch gelöst werden, daß die vertikalen Schneidmesser aus einem durchgehenden Blechstreifen gebildet sind, wobei der Blechstreifen an seiner vom Schneidmaterial zuerst berührten, zur Schneidrichtung vorderen Längsseite quer zur Schneidrichtung in regelmäßigen Abständen parallel eingeschnitten ist und seine zwischen den Einschnitten liegenden Teile derart hochgebogen sind, daß sie in Draufsicht jeweils in Schneidrichtung weisen.

Im Vergleich zu der DE—A—1 919 675 braucht jetzt statt einer Vielzahl einzelner vertikaler Schneidmesser nur noch ein einheitliches Messerteil hergestellt und gehandhabt zu werden. Anders ausgedrückt, statt also von einem Blechband zahlreiche Abschnitte abzulängen, diese einzeln aufzunehmen, abzuwinkeln und weiter zu verwenden, können jetzt beliebig viele vertikale Schneidmesser auf einmal erhalten werden. Die Herstellung wie auch Montage werden damit einfacher und gefahrloser. Verläuft das horizontale Schneidmesser nicht einheitlich in einer Richtung schräg, können auch mehr solcher Messerteile in Betracht kommen, beispielsweise bei einer V-Form des horizontalen Schneidmessers zwei solcher Messerteile.

Die feste Zuordnung der einzelnen vertikalen Schneidmesser innerhalb eines solchen Messerteils sowie die vereinfachte Handhabung erlauben den Einsatz von Blechstreifen recht geringer Stärke. So braucht diese beispielsweise nur noch ein Zehntel Millimeter zu betragen, also beispielsweise nur ein Drittel der Stärke bisher verwandter Blechbänder. Damit geht auch nur ein Drittel an Breite für einen freien Durchgang gegenüber bekannten vertikalen Schneidmessern verloren.

Beim Erfindungsgegenstand ist es also möglich, durch die einteilige Ausbildung der Schneidmesser die Blechstärke weiter zu verringern. Dieser für Haushaltsschneidgeräte entscheidende Vorteil tritt bei keiner der bekannten Vorrichtungen in Erscheinung, denn dort ist die Stabilität der Träger und Schneidbleche offensichtlich wichtiger für ein brauchbares Schneidergebnis als die geringe Stärke der Messer und die dadurch bedingte geringe Verdrängung des Schneidgutes beim Schneiden.

Schließlich bedeutet der feste Zusammenhalt der vertikalen Schneidmesser gemäß der Erfindung noch eine wesentliche Erhöhung der Sicherheit. Dank dieses Zusammenhaltes lassen sich nämlich die vertikalen Schniedmesser besonders dauerhaft in das Küchengerät integrieren. Demgegenüber besteht bei bekannten Küchengeräten die Gefahr, daß unter Umständen einmal ein einzelnes vertikales Schneidmesser unbeabsichtigt in das Schneidgut gerät, nämlich bei einer unsachgemäßen Handhabung bzw. bei einem Bruch des Küchengerätes.

Anders als bei der DE—B—1 083 517 kommt bei der vorliegenden Erfindung ein ganz einfach geformtes Blech, nämlich mit parallelen Längsseiten, ein Blechstreifen also zum Einsatz. Zur Formung der Vertikalmesser genügen Einschnitte an der vorderen Längsseite sowie ein Hochbiegen der zwischen den Einschnitten liegenden Teile. Die wesentlichen Teile der Vertikalmesser bilden die Außenkante des Blechstreifens, bevor die Vertikalmesser abgebogen werden. Diese Außenkante unterliegt keinem Stanzvorgang und kann bereits von daher unmittelbar, d. h. auch ohne Anschliff als Schniedkante benutzt werden. Im übrigen wird eine besondere Form erzeugt, von der wesentliche Vorteile ausgehen.

So ergeben sich beim Hochbiegen der Teile zwischen den Einschnitten vertikale Schneidmesser, welche im Schneidrichtung in der Höhe anwachsen. Die zu zerschneidende Frucht gelangt dadurch zunächst mit denjenigen Messerabschnitten in Berührung, welche am nächsten an der Basis angeordnet und damit am stabilsten sind. Bei einer solchen Gestalt der vertikalen Messer schneiden sich diese erst allmählich und somit sehr leicht in die Frucht ein, sozusagen mit einem ziehenden Schnitt, wobei sie sich immer stärker in der Frucht führen und darin stabilisieren.

Die vertikalen Schneidmesser in erfindungsgemäßer Ausbildung benötigen nur eine sehr geringe Materialstärke und erreichen damit im Ergebnis eine ebenso hohe Formbeständigkeit wie die bekannten vertikalen Schneidmesser. Im übrigen wird das Schneiden von Früchten damit bequemer. Für manche Früchte bedeutet das aber noch mehr. Die geringe Verdrängung des geschnittenen Fruchtfleisches ergibt nicht nur einen leichten, sondern auch einen trockenen Schnitt, d.h. es wird kaum Saft entwickelt, was insbesondere für Zwiebeln o, dgl. wichtig ist.

Es können mit einer etwas abgeänderten Ausführungsform Früchte, auch ohne größeren Zusammenhalt, also lagige Früchte wie wiederum Zwiebeln o.ä., auch mühelos und sauber in Würfel zerteilt werden, was bisher regelmäßig problematisch war. Dazu müssen die vertikalen Schneidmesser, welche das horizontale Schneidmesser überlicherweise nur minimal überragen, doppelt so hoch ausgebildet sein. Anders ausgedrückt, die Höhe der vertikalen Schneidmesser sollte das Zweifache des Abstandes zwischen unterer Führungsplatte und horizontalem Schneidmesser betragen. Zwischen den Schneidvorgängen ist die Frucht um etwa 90° zu drehen.

Selbstverständlich lassen sich auch mit vertikalen Schneidmessern, die nur bis zum horizontalen Schneidmesser reichen, Würfel schneiden. Dafür muß die Frucht zuvor von Hand mit einem Messer mehrmals parallel eingeschnitten werden. Mit diesen Einschnitten wird die Frucht anschließend quer zur Schneidrichtung gestellt und ohne Drehung wiederholt gegen das horizontale Schneidmesser geführt.

Die Formbeständigkeit ist besonders hoch, wenn die Einschnitte gleich tief sind und jeweils nur bis zu einem hochgezogenen Teil reichen.

Sollen die vertikalen Schneidmesser möglichst kurz hinter ihrer höchsten Erhebung enden, beispielsweise um sie besonders nahe vor dem horizontalen Schneidmesser anordnen zu können, ist es zweckmäßig, die Einschnitte in etwa unter einem rechten Winkel zur Schneidrichtung verlaufen zu lassen.

Die zum Einsatz kommenden Blechstreifen bewegen sich mit ihrer Materialstärke in der Größenordnung von Rasierklingen. Sie besitzen so dünne Längsseiten, daß sie grundsätzlich auch ohne Anschliff auskommen. Andererseits kann die Schneidwirkung der vertikalen Schneidmesser nach der Erfindung noch besonders intensiviert werden, wenn die Außenkante (Längsseite mit den Einschnitten) angeschliffen ist. Das Anschleifen kann am ungeformten Blechstreifen erfolgen. Bei den hochgebogenen Teilen ergibt sich dann jeweils eine besonders wirksame obere Schneidkante.

Berücksichtigt man weiter, daß die Höhe der vertikalen Schneidmesser in Schneidrichtung von beinahe Null anwachsen kann, so entfällt praktisch die vordere Schneidkante bzw. wird die obere gleichzeitig auch zur vorderen Schneidkante und kann somit erreicht werden, daß praktisch die gesamte wirksame Schneidkante angeschliffen ist.

Schließlich ließe sich die Erfindung bereits in der Weise verwirklichen, daß der vorgeschlagene Blechstreifen auf der Oberfläche der unteren Führungsplatte festegemacht, beispielsweise festgeklebt oder festgenietet würde. Es empfiehlt sich jedoch, den Blechstreifen in die untere Führungsplatte formschlüssig einzulassen. Für Haushaltsgeräte aus Kunststoff bedeutet dies, daß der Blechstreifen mit in die Spritzgießform einzusetzen und einzugießen ist, wobei die hochgebogenen Teile die Führungsplatte durchdringen.

Kurze Beschreibung der Zeichnung

Die Erfindung wird nachstehend anhand der Zeichnung für ein Ausführungsbeispiel weiter beschrieben. Darin zeigen:

Figur 1 ein komplettes Küchengerät in Draufsicht,

Figur 2 eine untere Führungsplatte in vergrößerter Darstellung, ebenfalls in Draufsicht, und

Figur 3 den Gegenstand nach Figur 2 in Seitenansicht.

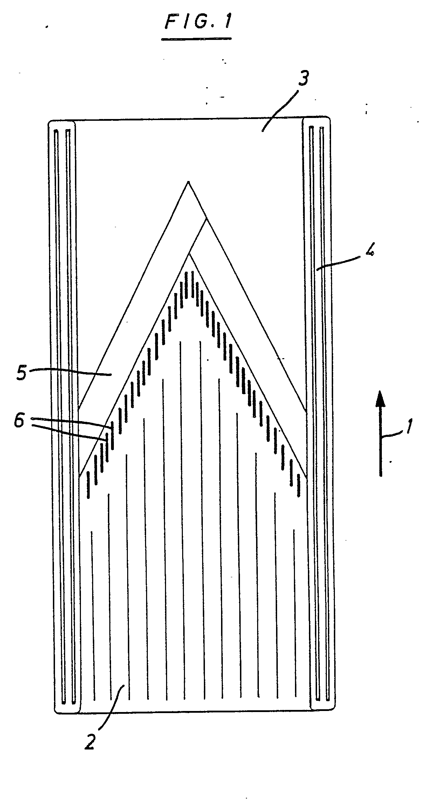

Bei dem in Figur 1 wiedergegebenen Küchengerät zum Schneiden von Früchten in Streifen ist die Schneidrichtung mit einem Pfeil 1 versinnbildlicht. Das Küchengerät besitzt eine untere Führungsplatte 2 sowie eine sich daran in Schneidrichtung anschliesende obere Führungsplatte 3. Die Ebenen der Führungsplatten 2, 3 verlaufen im wesentlichen parallel zueinander. Die obere Führungsplatte 3 wird seitlich von Rahmenteilen 4 überragt und begrenzt. Die Rahmenteile 4 halten gleichzeitig die untere Führungsplatte 2, welche als auswechselbares Einschubteil ausgebildet ist.

An ihrer Vorderkante weist die obere Führungsplatte 3 ein horizontales Schneidmesser 5 auf, mit dem sie schräg in Schneidrichtung verläuft, und zwar ausgehend von den Rahmenteilen 4. Insgesamt besitzt damit das horizontale Schneidmesser 5 V-Form. Vor dem horizontalen Schneidmesser 5 sind mehrere vertikale Schneidmesser 6 an der unteren Führungsplatte 2 angeordnet.

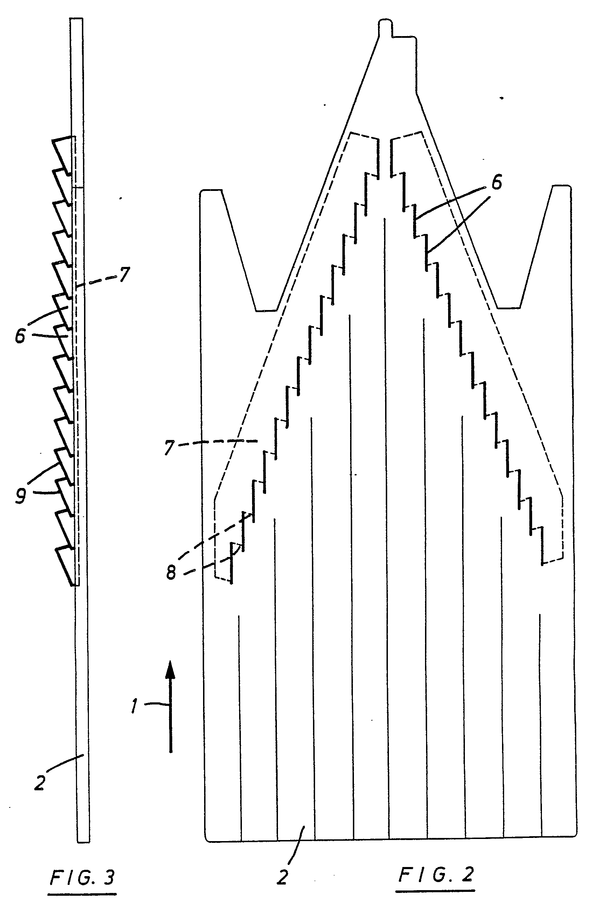

Wie insbesondere die Figuren 2 und 3 erkennen lassen, sind die vertikalen Schneidmesser 6 aus einem durchgehenden Blechstreifen 7 gebildet. Der Blechstreifen 7 ist von geringer Stärke, nämlich nur etwa einem Zehntel Millimeter. Er weist im einzelnen einen flachen Teil und mehrere hochgebogene Teile auf. Mit seinem flachen Teil ist der Blechstreifen 7 in die untere Führungsplatte 2 unsichtbar eingelassen, während er mit seinen hochgebogenen Teilen die untere Führungsplatte 2 durchdringt. Letztere Teil sind die eigentlichen vertikalen Schneidmesser 6.

Zur Ausbildung dieser Schneidmesser 6 ist der Blechstreifen 7 an seiner vorderen Längsseite in regelmäßigen Abständen mit parallelen, gleich tiefen Einschnitten 8 versehen, welche quer zur Schneidrichtung verlaufen und hier jeweils nur bis zu einem hochgebogenen Teil reichen.

Die hochgebogenen Teile weisen in Draufsicht in Schneidrichtung. Ihre Höhe wächst in Schneidrichtung von beinahe Null an (vgl. Figur 3) und reicht mindestens bis zur Höhe des horizontalen Schneidmessers 5. Die vordere Längsseite des Blechstreifens 7 besitzt im übrigen eine angeschliffene Außenkante 9, welche jeweils eine besonders wirksame Schneidkante für die vertikalen Schneidmesser 6 liefert.

## Patentansprüche

1. Küchengerät zum Schneiden von Obst, Gemüse o. dgl. in Streifen mit einer unteren Führungsplatte (2) und einer sich daran anschließenden oberen Führungsplatte (3), wobei die obere Führungsplatte (3) an ihrer Vorderkante ein horizontales Schneidmesser (5) aufweist und damit schräg in Schneidrichtung (1) verläuft und wobei vor dem horizontalen Schneidmesser (5) mehrere vertikale Schneidmesser (6) feststehend an der unteren Führungsplatte (2) angeordnet sind, welche ihrerseits auswechselbar ist, dadurch gekennzeichnet, daß die vertikalen Schneidmesser (6) aus einem durchgehenden Blechstreifen (7) gebildet sind, wobei der Blechstreifen (7) an seiner vom Schneidmaterial zuerste berührten, zur Schneidrichtung vorderen Längsseite quer zur Schneidrichtung (1) in regelmäßigen Abständen parallel eingeschnitten ist und seine zwischen den Einschnitten (8) liegenden Teile derart hochgebogen sind, daß sie in Draufsicht jeweils in Schneidrichtung (1) weisen.

2. Küchengerät nach Anspruch 1, dadurch gekennzeichnet, daß die Einschnitte (8) gleich tief sind und jeweils nur bis zu einem hochgebogenen Teil reichen.

3. Küchengerät nach Anspruch 1, dadurch gekennzeichnet, daß die Einschnitte (8) in etwa unter einem rechten Winkel zur Schneidrichtung verlaufen.

4. Küchengerät nach einem der Ansprüche 1 bis 3, dadurch gekennzeichnet, daß die Längsseite mit den Einschnitten (8) eine angeschliffene Außenkante (9) aufweist.

5. Küchengerät nach Anspruch 1, dadurch gekennzeichnet, daß der Blechstreifen (7) in die untere Führungsplatte (2) formschlüssig eingelassen ist, wobei die hochgebogenen Teile die Führungsplatte (2) durchdringen.

## Revendications

1. Appareil ménager pour couper les fruits, légumes ou analogues en bandes, comportant une plaque inférieure de guidage (2) et une plaque supérieure de guidage (3) qui lui fait suite, la plaque supérieure de guidage (3) présentant à son bord antérieur un couteau horizontal (5) et ayant donc une allure oblique dans la direction de coupe (1), plusieurs couteaux verticaux (6) étant disposés de façon fixe sur la plaque inférieure de guidage (2) et étant de leur côté interchangeables, caractérisé par le fait que les couteaux verticaux (6) sont formés en partant d'une bande de tôle continue (7) étant entaillée parallèlement à des espacements réguliers transversalement à la direction de coupe (1), à son côté longitudinal antérieur dans le sens de coupe touché en premier lieu par le produit à couper, et ses parties situées entre les entailles (8) étant relevées de telle sorte qu'en plan, elles sont tournées chacune dans le sens de coupe (1).

2. Appareil ménager selon la revendication 1, caractérisé par le fait que les entailles (8) ont la même profondeur et n'arrivent chacune que jusqu'à une partie relevée.

3. Appareil ménager selon la revendication 1, caractérisé par le fait que les entailles (8) s'étendent à peu près à angle droit par rapport à la direction de coupe.

4. Appareil ménager selon l'une des revendications 1 à 3, caractérisé par le fait que le côté longitudinal muni des entailles (8) présente un bord extérieur affûté (9).

5. Appareil ménager selon la revendication 1, caractérisé par le fait que la bande de tôle (7) est encastrée rigidement dans la plaque inférieure de guidage (2), les parties relevées traversant la plaque de guidage (2).

## Claims

1. Kitchen utensil for cutting fruit, vegetables or the like, into strips, comprising a lower guiding plate (2) and connected thereto an upper guiding plate (3), wherein the upper guiding plate (3) has a horizontal cutting blade (5) at its front edge and extends with it obliquely in the cutting direction (1) with the same, and wherein several cutting blades (6) are vertically and fixedly installed on the lower guiding plate (2) which is itself exchangeable, characterised in that the vertical cutting blades (6) are formed from a continuous sheet metal strip (7), the sheet metal strip (7) being incised with parallel cuts transversely to the cutting direction (1) at regular intervals at its longitudinal side which is in front with respect to the cutting direction and is first to come into contact with the material being cut, and its portions situated between the incisions (8) are bent upwards in a manner such that — in plan view — they always point in the cutting direction.

2. Kitchen utensil according of claim 1, characterised in that the incisions (8) are of equal depth and in each case extend only as far as an upwardly bent portion.

3. Kitchen utensil according to claim 1, characterised in that the incisions (8) extend at approximately a right angle to the cutting direction.

4. Kitchen utensil according to one of the claims 1 to 3, characterised in that the longitudinal side comprising the incisions (8) has a chamfered outer edge (9).

5. Kitchen utensil according to claim 1, characterised in that the sheet metal strip (7) is inset in form-locked manner into the lower guiding plate (2), the upwardly bent portions passing through the guiding plate (2).

## FIG. 1

*FIG. 3*

*FIG. 2*